(19) **Europäisches Patentamt / European Patent Office / Office européen des brevets**

(11) **EP 0 938 790 B1**

(12) **EUROPEAN PATENT SPECIFICATION**

(45) Date of publication and mention
of the grant of the patent:
**07.02.2007 Bulletin 2007/06**

(21) Application number: **98936609.1**

(22) Date of filing: **17.08.1998**

(51) Int Cl.:
**H04K 1/02** $^{(2006.01)}$

(86) International application number:
**PCT/IB1998/001255**

(87) International publication number:
**WO 1999/014880 (25.03.1999 Gazette 1999/12)**

(54) **A METHOD AND DEVICE FOR EXECUTING A DECRYPTING MECHANISM THROUGH CALCULATING A STANDARDIZED MODULAR EXPONENTIATION FOR THWARTING TIMING ATTACKS**

VERFAHREN UND VORRICHTUNG ZUR AUSFÜHRUNG EINER ENTSCHLÜSSELUNG MITTELS EINER STANDARDISIERTEN MODULAREN POTENZIERUNG ZUM VEREITELN EINES ZEITANGRIFFS

PROCESSUS ET DISPOSITIF POUR L'EXECUTION D'UN MECANISME DE DECHIFFREMENT PAR CALCUL D'EXPONENTIATION MODULAIRE STANDARD POUR EMPECHER LES ATTAQUES RELATIVES A LA SYNCHRONISATION

(84) Designated Contracting States:
**DE FR GB**

(30) Priority: **16.09.1997 EP 97202855**

(43) Date of publication of application:
**01.09.1999 Bulletin 1999/35**

(73) Proprietor: **Koninklijke Philips Electronics N.V.
5621 BA Eindhoven (NL)**

(72) Inventors:
• **HOLLMANN, Hendrik, Dirk, Lodewijk
NL-5656 AA Eindhoven (NL)**

• **VAN DIJK, Marten, Erik
NL-5656 AA Eindhoven (NL)**
• **LENOIR, Petrus, Johannes
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**US-A- 5 166 978        US-A- 5 479 511
US-A- 5 604 805**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

The invention relates to a method according to the preamble of Claim 1. Encrypting by executing a standardized modular exponentiation is used in the environment of a smart card and elsewhere, such as for supporting financial operations, through blocking opportunity for falsifying the control or contents of such operations. Encryption can be expressed as $y = E(x) = <x^e>_M$, wherein $x$ is a message, $e$ is an encryption key, and $M$ a modulus. Likewise, decryption is effected as $x = D(y) = <y^d>_M$, wherein d is the decryption key. For a particular device, the values of $M$ and e are known and fixed, the content of $x$ to be encrypted is naturally unknown and variable, and the value of $d$ is fixed but unknown. For certain operations, such as the providing of an encoded signature, the first encoding also operates with a secret key along similar lines. For the present description, such encoding is also called "decrypting". Now, the decrypting is effected digit-wise. For each digit of $d$, one or two first multiplications $u.v \bmod M$ produce a first result. The attaining of such first result is followed by an addition. After attaining a second result, the next digit of $d$ is processed. Prior technology has kept the size of the second result down by, in operation, subtracting an appropriate multiplicity (zero, one, or more) of the quantity $M$, because the register width of available hardware is adapted to the digit length, that is generally much less than the size of the overall quantities used in the multiplication.

It has been found that the sequential pattern of the above multiplicity may depend on the values of $u, v,$ and $M$. Further, the use of temporal statistics on a great number of mutually unrelated decryption operations with arbitrary messages allows to derive a value for d. This renders the protection by the encryption illusory. Therefore, a need exists to mask these statistical variations by some additional affecting of the calculation procedure.

In consequence, amongst other things, it is an object of the present invention to suppress the relation between the value of the decryption key and the temporal structure of the calculating steps, through a masking mechanism that does not appreciably lengthen the calculations, nor would necessitate inordinate hardware facilities. Now therefore, according to one of its aspects, the invention is characterized by the characterizing part of Claim 1. In particular, the inventors have recognized that present day microcontrollers, even those that are used in the constraining environment of a smart card, can allow the use of longer storage registers than before, and in particular, a few bits longer than the digits used in the calculation. Such registers would provide the extra freedom that the present invention is in need of.

According to the invention, the procedure executes the exponentiation along the Quisquater or Barrett prescriptions. These are methods commonly in use, and the amending of their prosecution for adhering to the invention is minimal. The pattern of the calculation procedure no longer depends on the decryption key. This takes away any method for so deciphering the value of the decrypting key.

The invention also relates to a device arranged to implement the method of the invention. Further advantageous aspects of the invention are recited in dependent Claims.

These and further aspects and advantages of the invention will be discussed more in detail hereinafter with reference to the disclosure of preferred embodiments, and in particular with reference to the appended Figures that show:

Fig. 1, a hardware block diagram of the invention;
Fig. 2, a flow chart of the invention.

The so-called "timing attack" follows the recognizing that for various implementations of the modular exponentiation, the computation times of successive encryptions will vary slightly from one message to another. With knowledge of the implementation, precise measuring of computation times for a large number of messages may lead to obtaining the secret key. Experiments have demonstrated that such is feasible indeed. To understand the nature of the attack and possible countermeasures, we give the main elements of the RSA encryption/decryption method and some common implementations.

Messages are encoded by integers $x$ in a range $0 < x < M$, for some fixed number $M$. For integers $u, v,$ and $N, u \equiv v \bmod N$ indicates that $N$ divides $u - v$. Also, $<u>_N$ denotes the remainder of $u$ after division by $N$, that is the unique number $r$ with $0 \leq r < N$ such that $u = r + q.N$ for some integer $q$. If $\alpha$ is a real number, then $\lfloor \alpha \rfloor$ denotes the largest integer $k \leq \alpha$ (truncating) and $\lceil \alpha \rceil$ denotes the smallest integer $k \geq \alpha$.

The RSA scheme is based on the difficulty to factor large numbers, as follows. Two communicating parties may agree on a number $M$, which typically is an ($n'=512$)-bit number, and is the product $M=p.q$ of two prime numbers $p$ and $q$ that are kept secret, and each have approximately $n'/2$ bits. The parties also agree on a private key number $d$ and a public key number $e$. The numbers $M$ and $e$ are made public, while the number $d$ may be put into a tamper-resistant module of a smart card that is given to the user party. The private key $d$ must remain unknown to the user. Instructions to change the account of the user are sent in encrypted form to the smart card which then uses the private key $d$ to decrypt the instructions to amend the account. The smart card is considered "hacked" if a user obtains the private key $d$, and might so for instance instruct the card to increase the account. The numbers $d$ and $e$ must satisfy

$$d.e \equiv 1 \bmod \mathrm{lcm}(p\text{-}1, q\text{-}1),$$

where for any integers **a, b,** the number **lcm(a,b)** is the least common multiple of **a** and **b,** the smallest positive integer divisible by both **a** and **b**. Given a modulus **N** and an integer **c** for which **gcd(c,N)=1,** that is, with **c** and **N** relatively prime (without a common divisor), it is easy to compute a number **c'** such that **c.c'≡1 mod N.** To transfer a secret message **x,** 0<**x**<**M,** to a user, the number **y = E(x)=<xᵉ>$_M$** is sent instead. From an encoded message **y,** the card computes **D(y)=<yᵈ>$_M$.** Note that if **y=<xᵉ>$_M$,** then **D(y)≡(xᵉ)ᵈ≡xᵈ·ᵉ≡x mod M.** This equality follows from the fact that **yᶠ≡y mod M** holds for all **y** if and only if **f≡1 mod lcm(p-l,q-1).**

The security of the RSA scheme depends on the difficulty to recover **<x>$_M$** from **<xᵉ>$_M$** without knowing the private key **d.** For arbitrary **x** this problem appears as difficult as inverting **e modulo lcm(p-1,q-1),** i.e. finding **d** without knowing **p** and **q,** which is as difficult as factoring **M.**

Modular exponentiation

The main operation in an RSA scheme is modular exponentiation, **y→x=<yᵈ>$_M$.** Often, this operation is implemented as follows. Write

$$d = \sum_{i=0}^{m\text{-}1} d_i\, 2^i\ ,$$

where **d$_i$ε{0,1},** the binary representation of **d.** Put **x$^{(m)}$=1,** and compute **x$^{(m-1)}$, x$^{(m-2)}$,..., x$^{(1)}$, x$^{(0)}$** recursively as

$$x^{(k)} = <<(x^{(k+1)})^2>_M \cdot y^{d_k}>_M. \tag{1}$$

We now have **x=x$^{(0)}$.** The original message **x** is computed from the received encrypted message **y** in **m** steps, each step consisting of a squaring modulo **M** followed by a multiplication modulo **M** if the corresponding key-bit is 1. From (1) we see that exponentiation is done through repeated modular multiplications, that is, the operation

$$(u,v) \to z = <u.v>_M. \tag{2}$$

Most systems simplify this multiplication by grouping **n'** bits of the number **v** into digits of **b** bits, wherein **b** may arbitrarily range from **b=1** to **b=32.** Thus, **v** is written as

$$v = \sum_{i=0}^{r\text{-}1} v_i\, 2^{bi}\ ,$$

where **0 ≤ v$_i$ <2$^b$** and **r =⌈$n'/b$⌉.** Formula (2) is calculated recursively by putting **z$^{(r)}$=0,** and computing **z$^{(r-1)}$, ..., z$^{(0)}$** successively by

$$z^{(i)} = <<u \cdot v_i>_M + z^{(i+1)} \cdot 2^b>_M. \tag{3}$$

It is not attractive to implement the operation

$$(u,v_i) \to <u.v_i>_M \tag{4}$$

"as is", for the following reason. The number $w = u \cdot v_i$ is an $(n'+b)$-bit number. The number $<w>_M$ is obtained as

$$< w >_M = w - \left\lfloor \frac{w}{M} \right\rfloor . M . \qquad (5)$$

This computation needs a multiplication and a division of $w$ by the $n'$-bit number $M$. However, normal division of large numbers is much more complex than multiplication. Therefore, various methods have replaced the direct implementation of (5) by implementations that use a few (typically, two or three) multiplications, possibly followed by a few (typically, one or two) subtractions of $M$.

Several methods use special representations for numbers modulo $M$. This needs converting from ordinary representation to special representation and back. The converting is done only once at the start and once at the end of a modular exponentiation. In between, many modular multiplications are computed, so the extra overhead is negligible. We will give two such methods in detail.

The **additional** subtractions that sometimes must follow a modular multiplication make timing attacks feasible. In such attack, the smart card must decrypt a large number of messages, and a statistical analysis of the decryption times enables an attacker to recover the bits of the private key $d$. The invention adapts known methods for modular multiplication so that these extra subtractions are no longer needed.

By itself, US A 5,166,978 discloses the usage of the Quisquater algorithm. The present invention, through amending this algorithm, allows masking the temporal structure of this program's execution, so that a cryptographic attack for the decryption key becomes harder.

TWO METHODS FOR MODULAR MULTIPLICATION

In the **Quisquater** method, all reduction is done modulo some multiple $N$ of $M$, where the first $p$ most significant bits of $N$ are all equal to $1$, that is, the modulus $N$ is an $n$-bit number for which

$$2^n - 2^{n-p} \leq N < 2^n \qquad (7)$$

At the end of the exponentiation modulo $N$, the result is reduced modulo $M$ to get the desired answer. To compute a modular multiplication

$$(u,v) \rightarrow z = <u \cdot v>_N, \qquad (8)$$

the $n$-bit number $v$ is partitioned into blocks of $b \leq p-1$ bits and $z$ is found recursively by multiplying $u \cdot v_i$ similarly to (3). Expression (5) is replaced by the "Quisquater-reduction":

$$Q(w) = w - \left\lfloor \frac{w}{2^n} \right\rfloor . N. \qquad (9)$$

Remark 1: Note that $Q(w) \equiv <w>_N \bmod N$. Only, we cannot guarantee that $Q(w) < N$. For large w the number $Q(w)$ can indeed be bigger than $N$. However, we can show that $Q(w) < \theta N$ if $w < 2^p(\theta-1)N$, so the Quisquater-reduction is "almost as good" as the required residue-operation. Now, the result $z$ of the multiplication is computed recursively by putting $z^{(r)} = 0$ and

$$z^{(i)} = Q(u.v_i + z^{(i+1)} 2^b) \qquad (10)$$

where now $r = \lceil n / b \rceil$. Note that $z := z^{(0)} \equiv u \cdot v \bmod N$ holds. We may show that for $b \leq p-1$ and $0 \leq u < N$, we have $0 < z^{(i)} < 3N$ for all $i$. So the result $z = <u \cdot v>_N$ is obtained from $z^{(0)}$ by subtracting $N$ at most twice. We will prove this later.

The **Barrett** method uses the given modulus **N** = **M** itself. The modular reduction $<u>_N$ of a number **u** is estimated by

$$B(u) = u - \left\lfloor \left\lfloor \frac{u}{\alpha^{n-1}} \right\rfloor \cdot \frac{R}{\alpha^{n+1}} \right\rfloor \cdot N, \qquad\qquad (11)$$

where $\alpha$ is the number base for the message,

$$R = \left\lfloor \frac{\alpha^{2n}}{N} \right\rfloor,$$

and **n** is chosen such that $\alpha^{n-1} \le N < \alpha^n$. The product **z** = **u** . **v** of two numbers **u** and **v** is calculated as follows:

(i) $z^{(0)} = u \cdot v$;
(ii) $z = B(z^{(0)})$.

We will prove that if $0 \le u, v < N$, the result **z** obeys $0 \le z < 3N$, so that we need at most two extra reductions to obtain $<u.\ v>_N$. For $\alpha \ge 3$ the computation of $B(z^{(0)})$ may be simplified. Let indeed

$$w = \left\lfloor \left\lfloor \frac{u}{\alpha^{n-1}} \right\rfloor \cdot \frac{R}{\alpha^{n+1}} \right\rfloor \cdot N$$

so that **z=u-w**. By the above remark, $z < 3N < \alpha^{n+1}$. From $z \equiv u - w \bmod \alpha^{n+1}$, we conclude that

$$z = <z>_{\alpha^{n+1}} = \begin{cases} <u>_{\alpha^{n+1}} - <w>_{\alpha^{n+1}}, & \text{if this expression is} \ge 0 \\ \alpha^{n+1} + <u>_{\alpha^{n+1}} - <w>_{\alpha^{n+1}} & \text{otherwise.} \end{cases}$$

## IMPROVEMENTS OF THE ALGORITHMS FOR MODULAR MULTIPLICATION

Timing attacks are feasible because the modular multiplication may or may not require additional subtractions of the modulus. However, these additional reductions may be avoided: by a slight change of the original assumptions, we can work throughout the modular exponentiation with the unreduced results, and do any reduction only at the very end of the modular exponentiation. To show that this works, we will provide upper bounds on the intermediate results of our modular multiplications for each algorithm.

For the modified Quisquater method we assume that we have a modulus M for which $2^{n'-1} \le M < 2^{n'}$. Now, we compute a number **N** = **cM** for which holds $2^n - 2^{n-p} \le N < 2^n$. This is always possible if $n \ge n'+p$. Because the admissible interval for **N** has size $2^{n-p} \ge 2^{n'} > M$, some multiple of **M** must fall within this interval. All intermediate computations are done modulo **N**, instead of modulo **M**, with a reduction modulo **M** at the very end. **N** is a multiple of **M**, so no information is lost.

As before, to get the result **z** = **u** . **v** of a modular multiplication of **u** and $v = \sum_{i=0}^{r-1} v_i 2^{bi}$, we use the following:

(i) $z^{(r)} = 0$
(ii) For i= r-1, ..., 0, we compute

$$h = u \cdot v_i + z^{(i+1)} \cdot 2^b \text{ and } z^{(i)} = Q(h);$$

**(iii) z = z$^{(0)}$.**

We will need the following facts about this algorithm.

Proposition 3.3. If **0 $\leq$ u <aN** and **2$^p$+a2$^b$ $\leq$ (2$^p$-2$^b$)** $\theta$, then for all **i**,

$$0 \leq z^{(i)} < \theta\, N \qquad\qquad (12)$$

Proof: If **0 < u < aN, N $\geq$ 2$^n$-2$^{n-p}$, 0 $\leq$ v$_i$ <2$^b$, and 0 $\leq$ z$^{(i+1)}$ < $\theta$ N**, then with **h := u . v$_i$ + z$^{(i+1)}$.2$^b$** we have that

$$h < aN2^b + \theta\, N2^b = (a + \theta)N2^b,$$

hence

$$(Q(h) - <h>_N)/N = \left\lfloor \frac{h}{N} \right\rfloor - \left\lfloor \frac{h}{2^n} \right\rfloor$$

$$< 1 + \frac{h}{N} - \frac{h}{2^n}$$

$$= 1 + h(2^n - N)/(N2^n)$$

$$< 1 + (a + \theta)N2^b 2^{n-p}/(N2^n)$$

$$= 1 + (a + \theta)2^{b-p} \leq \theta.$$

Now **Q(h) $\equiv$ h $\equiv$ <h>$_N$**, hence the number **(Q(h)-<h>$_N$)/N** is an integer; since according to the above this number is < $\theta$, we conclude that **(Q(h)-<h>$_N$)/N $\leq$ $\theta$-1.** Since also **<h>$_N$ <N** by definition, it follows that: **z$^{(i)}$ = Q(h) < $\theta$ N.**

Obviously, condition (12) can only be satisfied if **p $\geq$ b+1.** Further, if **p = b+1,** then (12) is equivalent to the condition $\theta \geq$ **a+ 2.** So if **a = 1,** then the number **z** resulting from the above algorithm always satisfies **0 $\leq$ z $\leq$ 3N,** so that at most two further reductions are required, a result used hereabove.

If all results of modular multiplications must be less than **aN**, we need $\theta$ = **a**, and it is necessary and sufficient that

$$p \geq b + 2, \quad \theta = a \geq 2.$$

So, provided that **p = b + 2**, during modular exponentiation we may forego additional reductions after each modular multiplication and still guarantee that all results are non-negative and $\leq$ **2N.** The result of the modular exponentiation is obtained by at most one reduction at the very end, plus a reduction z $\rightarrow$ <Z>$_M$.

The **Barrett** method can be modified in a way similar to Quisquater's. Assume that modulus **M obeys** $\alpha^{n'-1} \leq$ **M < $\alpha^{n'}$.** Write **N=M** and **n=n'** (no change of modulus). As before let **r** = $\lceil n/ b \rceil$. To compute the result **z = u . v** of a modular multiplication of **u** and $v = \sum_{i=0}^{r-1} v_i \alpha^{bi}$ in $\alpha$-ary notation, we use the following. For any numbers **k,l**, define

$$B_{k,l}(h) = h - \left\lfloor \left\lfloor \frac{h}{\alpha^k} \right\rfloor \cdot \left\lfloor \frac{\alpha^{k+l}}{N} \right\rfloor / \alpha^l \right\rfloor N.$$

**(i) z$^{(r)}$= 0**
**(ii) For i = r -1, ...., 0,** we compute

$$h = v.u_i + z^{(i+1)} . \alpha^b$$

and

$$z^{(i)} = B_{k,l}(h);$$

(iii) $z = z^{(0)}$.

Proposition **3.4: If $0 \leq u < aN$, $0 \leq z^{(i+1)} \leq gN$**, and

$$k = n\text{-}1, l = b\text{+}1, \ 2\text{+}a\text{+}g \leq \theta, \tag{13}$$

or

$$k = n, l = r\text{+}1, a \ = g = \theta, \ \theta \ \geq \max\ (2\alpha/(\alpha\text{-}2), (1\text{+}\alpha)\alpha^2/(\alpha^2\text{-}2)), \tag{14}$$

or, for example,

$$\alpha \ = 4, \ k = n\text{-}1, l = b\text{+}2, a \ = g = \theta, \ \theta \ \geq 3, \tag{15}$$

or

$$\alpha \ = 4, \ k = n\text{-}2, \ l = b\text{+}4, \ a = g \ \theta, \ \theta \ \geq 2, \tag{16}$$

then $0 \leq z^{(i)} < \theta N$.
**Proof: If $0 \leq u < aN$, $\alpha^{n-1} \leq N < \alpha^n$, $0 \leq v_i < \alpha^b$, and $0 \leq z^{(i+1)} \leq gN$, then $z^{(i)} < aN\alpha^b + gN\alpha^b = (a+g)N\alpha^b$,**
hence

$$(B_{k,l}(h) - <h>_N)/N \qquad = \left\lfloor \frac{h}{N} \right\rfloor - \left\lfloor \left\lfloor \frac{h}{\alpha^k} \right\rfloor \left\lfloor \frac{\alpha^{k+l}}{N} \right\rfloor / \alpha^l \right\rfloor$$

$$< 1 + \frac{h}{N} - \left\lfloor \frac{h}{\alpha^k} \right\rfloor \left\lfloor \frac{\alpha^{k+l}}{N} \right\rfloor / \alpha^l$$

$$< 1 + \frac{h}{N} - (\frac{h}{\alpha^k} - 1)(\frac{\alpha^{k+l}}{N} - 1)/\alpha^l$$

$$= 1 + \frac{\alpha^k}{N} + \frac{h}{\alpha^{k+l}} - \frac{1}{\alpha^l}$$

$$< 1 + \frac{\alpha^k}{N} + \frac{(a+g)/N\alpha^b}{\alpha^{k+l}}$$

$$\le 1 + \max(\alpha^{k-n+1} + (a+g)\ \alpha^{n-1+b-k-l}, \alpha^{k-n} + (a+g)\ \alpha^{n+b-k-l}).$$

The last inequality follows from $\alpha^{n-1} \le N < \alpha^n$, and from the fact that a convex function $s/N+tN$, $s \ge 0$, of $N$ becomes maximal when $N$ is either minimal or maximal. An interesting result needs $k+l \le n+b$. To limit the size of the necessary multiplication to compute $B_{k,l}()$, the number $k$ should be as large and $k+l$ as small as possible. Each additional condition (13), (14), (15), and (16) then implies this last expression to be at most equal to $\theta$.

Now $B_{k,l}(h) \equiv h \equiv <h>_N \bmod N$, hence $(B_{k,l}(h)-<h>_N)/N$ is an integer; since this number is less than $\theta$, it follows that $(B_{k,l}(h)-<h>_N)/N \le \theta -1$. Since also $<h>_N < N$ by definition, we conclude that $z^{(i)} = B_{k,l}(h) < \theta N$.

The above is used in several ways. One way takes $b = n$, $k = n-1$, and $l = n+1$. Then we compute $z=B_{k,l}(u.v) = B(u.v)$ in one step, so $g = 0$. Proposition 3.4 states that if $u < N$, then $z < 3N$. This proves the earlier claim.

Alternatively, $\alpha$ is taken small, typically $\alpha = 4$, and $k=n$, $l=b+1$, and $a = g = \theta$. Since $(1+\alpha)\alpha^2/(\alpha^2-2) \ge 2\alpha/(\alpha-2)$ for $\alpha \ge 3$, the result in Proposition 3.4 states that all intermediate results will be $< \theta N$ if $\theta \ge (1+\alpha)\alpha^2/(\alpha^2-2)$ and $\alpha \ge 3$, that is, $< 6N$ when $\alpha = 4$. Similarly, for $a = 4$, if we let $k = n-2$, $l = b+4$, $a = g = \theta =2$, then all intermediate results will be $< 2N$ and if we let $k = n-1$, $l = b+2$, $a= g = \theta =3$, then all intermediate results will be $< 3N$. Therefore, the modular exponentiation may forego additional reductions after each modular multiplication and still guarantee that all intermediate results are non-negative of size at most $\theta N$. Here $\theta$ is a number between 2 to 6, depending on the choice for $k$ and $l$. The final result is obtained via only a few reductions at the very end of the modular exponentiation.

By itself, a well-known third method for implementing modular exponentiation is due to Montgomery. An improvement to this particular method has been disclosed in M. Shand & J. Vuillemin, Fast Implementation of RSA Cryptography in Proc. 11th Symposion on Computer Arithmetic, IEEE 1993, p.252-259. In this reference, certain normalizing proposals to the Montgomery method are done to obviate the need for repeated normalizations after intermediate processing steps. The object of the reference was to increase the overall speed of the processing. The present invention on the other hand, has shown that timing attacks may be thwarted by initial operand conversions plus some minimal hardware facilities for non-Montgomery algorithms. Such timing attacks have not figured in the setting of the above citation. Furthermore, the Quisquater and Barrett methodologies have been herein disclosed expressly by way of non-limiting embodiments only.

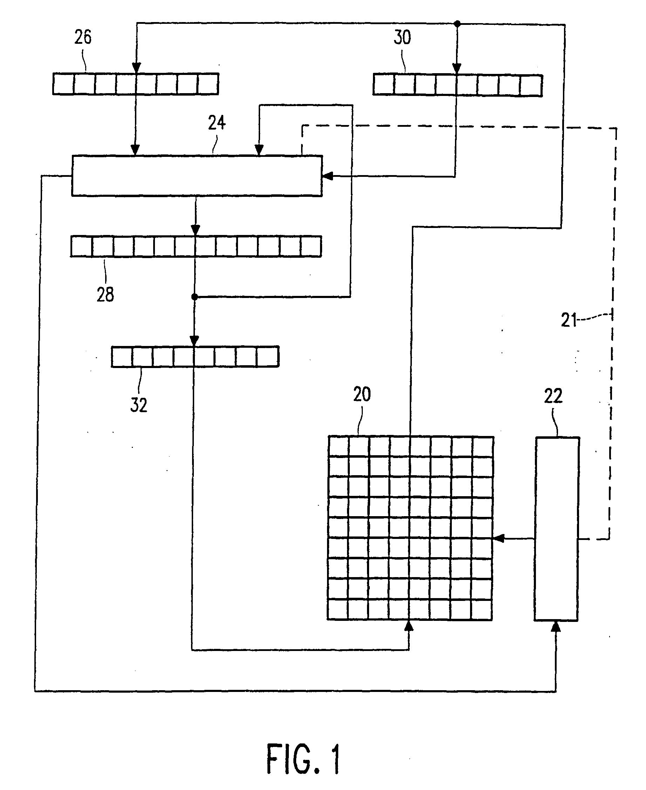

Figure 1 is a hardware block diagram of a device according to the invention. The operand memory 20 is as shown based on the modular storage of 8-bit digits. Address sequencer 22 successively addresses the various digit locations for reading and writing, as the case may be. Processing element 24 and address sequencer 22 operate in mutual synchronism through interconnection 21. Processing element 24 has an input register 26 for a first digit that may be received as read from memory 20. Furthermore, it has an input register 30 for a second digit through retrocoupling from its result register 28. The latter has an enlarged length with respect to the digit length. A selecting register 32 allows digit-based retrostorage into memory 20. The processing element may execute normalizing, preprocessing and postprocessing as described earlier, and further the standard modular multiplication of the Quisquater, Barrett, and similar non-Montgomery methods. The particular operations are governed through control register 30.

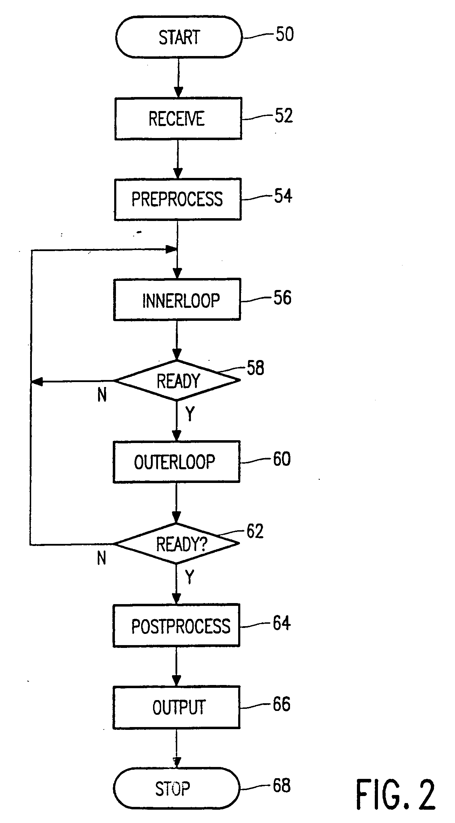

Figure 2 is a flow chart of the invention. In block 50, the operation is started, which may need claiming of various hardware and software facilities. In block 52, the encrypted message is received. In block 54, the message is preprocessed in the manner described for any applicable algorithm. In block 56, one turn of the inner loop is executed, that calculates an intermediate result on the basis of two b-ary digits. In block 58, the system detects whether the inner loop in question has been executed a sufficient number of times (ready?). If no, the system reverts to block 56. If yes, the system proceeds to block 60 and executes one turn of the outer loop. Subsequently, in block 62, the system detects whether the outer inner loop in question has been executed a sufficient number of times (ready?). If no, the system reverts to block 56 for further executing the inner loop. If yes, the system proceeds to block 64 for postprocessing the final results, and subsequently to block 66 for outputting the result to a user, such as the central processing facility of the smart card in question. The combination of Figures 1, 2, in combination with the extensive further disclosure, is deemed to give the skilled are practitioner sufficient teachings as to how to implement the invention.

## SUMMARY OF THE METHODS

Input: **y, d, M** with $0 \leq y, M < \alpha^{n'}$ and $0 \leq d < \beta^m$ (Typically, $\alpha = \beta = 2$). **y** is the encrypted message.
Output: **x = $\langle y^d \rangle_M$**. First, the standard methods are reviewed.

a. Preprocessing

Quisquater: **n = n'+ p, N = c M**, where **p** is some integer and **c** is chosen such that $\alpha^n - \alpha^{n-p} \leq M < \alpha^n$. This produces a unique choice for **c.** Also, $\alpha$ **= 2.**
Barrett: **n = n', N = M.**

b. Partitioning of d

Write $d = \sum_{i=0}^{m-1} d_i \beta^i$. Typically, $\beta$ **= 2** and **m** = **#bits** of **d.**

c. Outer loop

$z \leftarrow 1$
repeat for **i = m - 1 $\rightarrow$ 0:**
$z \leftarrow$ **Mult(z, z; N) (if** $\beta$ **= 2;** in general $z \leftarrow \langle z^\beta \rangle_M$.**)**

$$z \leftarrow \mathbf{Mult(z, y^{d_i}; N)}$$ (only needed if $d_i > 0$).

endrepeat

d. Implementation of modular multiplication in operation Mult

The implementation of **z $\leftarrow$ Mult(u, v; N)** assumes $0 \leq u, v < N,$ and the result **z** satisfies $0 \leq z \leq N.$

e. Partitioning

Write $v = \sum_{i=0}^{r-1} v_i B^i,$ where $B = \alpha^b$ for some integer **b**. In other words, the **n** $\alpha$**-ary** digits of **v** are grouped in **r** blocks of **b** digits each. (So **n = r b** or **r** $= \lceil n/b \rceil$ if **n** is not a multiple of **b**.)
Moreover, Quisquater assumes that **b $\leq$ p - 1;** Barrett takes **b = n, r = 1**.

f. Inner Loop

$z \leftarrow 0$
repeat for i:
$h \leftarrow z. F + u. v_i$
$z \leftarrow R(h)$
endrepeat

$$\text{while } z \geq N \text{ do } z \leftarrow z - N. \tag{17}$$

Here, we have the following.

1. $i = r - 1 \rightarrow 0$ in Quisquater and Barrett,

2. $F = B = \alpha^b$ (Quisquater and Barrett)

3.

$$R(h) = \begin{cases} Q(h) := h - \left\lfloor \dfrac{h}{\alpha^n} \right\rfloor .N, \quad \text{(Quisquater)}, \\[2em] B(h) := B_{n-1,n+1}(h) = h - \left\lfloor \left\lfloor \left\lfloor \dfrac{h}{\alpha^{n-1}} \right\rfloor \left\lfloor \dfrac{\alpha^{2n}}{N} \right\rfloor \right\rfloor / \alpha^{n+1} \right\rfloor .N, \quad \text{(Barrett)} \end{cases}$$

The Barrett reduction operation $B()$ used here is a special case of the general Barrett reduction

$$B_{k,l}(h) := h - \left\lfloor \left\lfloor \left\lfloor \dfrac{h}{\alpha^k} \right\rfloor . \left\lfloor \dfrac{\alpha^{k+l}}{N} \right\rfloor \right\rfloor / \alpha^l \right\rfloor .N$$

4. In Quisquater and Barrett: $0 \leq w < 3N$ in all steps, for all intermediate results $w$.

9. Postprocessing

Here $z$ satisfies $0 \leq z < N.$
Quisquater: $x \leftarrow <z>_M.$
Barrett: $x \leftarrow z.$

RESUME OF CONDITIONS AND PROPERTIES IN "OLD" ALGORITHMS

Quisquater

$$p \geq b + 1$$

Barrett : -

NEW METHODS

a. Preprocessing

As before.

b. Partitioning of d

As before.

## c. Outer loop

As before, but the operation Mult is implemented slightly differently.

## d/e. Implementation of modular multiplication in operation Mult

Partitioning
As before, but for Quisquater we now require that $b \leq p\text{-}2$.

## f. Inner Loop

As before except that the last instruction "while $z \geq N$ do $z \leftarrow z - N$" is removed.
Also, for Barret, instead of taking $b = n$, $r = 1$ we allow other values of $b$, and instead of the special case $B() = B_{n-1,n+1}()$ we now take $B() = B_{k,l}()$ for other values of $k$ and $l$. (For example $k = n$, $l = b + 1$, or we choose $\alpha = 4$ and take e.g. $k = n$ -1, $l = b + 2$ or $k = n - 2$, $l = b + 4$).

## g. Postprocessing

Now we can only guarantee that $z < \theta N$ for some $\theta$, typically $\theta = 2$ or $\theta = 3$. So in case of Barrett, the while statement (17) which was removed from the Loop-part of the operation Mult must now occur here:

> while $z \geq N$ do $z \leftarrow z - N$.

For Quisquater, this same operation is also required, but can possibly be combined with the other postprocessing (which does not change).

RESUME OF CONDITIONS AND PROPERTIES IN "NEW" ALGORITHMS

## Quisquater

$$p \geq b + 2 \ (\text{instead of } b + 1)$$

## Barrett

Various possible values for the numbers $k,l$ of the Barrett reduction operator $B_{k,l}()$. A good condition may be found as follows.
To compute $u.v \bmod N$ by Barrett with steps d,e,f:

> If $v = (v_0 v_1 ... v_{r-1})$ each $v; < B = \alpha^b$ (b-ary digits) and given $0 \leq u < aM$, $0 \leq z \leq gN$ for the old z in step f, we have h $= z \cdot B + u \cdot v_i$, so for R(h), the new z, we have that

$$(R(h) - <h>_N)/N = (B_{k,l}(h) - <h>_N)/N$$

$$< 1 + \frac{(a+g)NB}{\alpha^{k+l}} + \frac{\alpha^k}{N}$$

$$\leq 1 + \max(\alpha^{k-n+1} + (a+g)\alpha^{n-1-k-l}B, \alpha^{k-n} + (a+g)\alpha^{n-k-l}B)$$

$$= 1 + \max(\alpha^{k-n+1} + (a+g)\alpha^{n-1+b-k-l}, \alpha^{k-n} + (a+g)\alpha^{n+b-k-l}),$$

which we need to be $\leq \theta$. Certainly needed $k+1 \geq n+b$
Classical: $b=n$, $k=n-1$, $l=n+1$, then $b=0$, $a=1 \rightarrow z < 3M$ ($\theta = 3$).

New: **b < n, a = g** = θ. The condition is **1 + max ($\alpha^{k-n+1}$ + (a+g) $\alpha^{n-1+b-k-1}$, $\alpha^{k-n}$+(a+g)$\alpha^{n+b-k-1}$)** ≤θ to have all intermediate results < θ **M.**

Better condition:

$$1 + \frac{2\theta N \alpha^b}{\alpha^{k+l}} + \frac{\alpha^k}{N} \leq \theta$$

for all allowable N.

$$\text{Example } \boldsymbol{\alpha=2} \rightarrow 1 + \frac{2^k}{N} + \frac{2\theta N \, 2^b}{2^{k+l}} < \theta$$

$$2^{n-1} \leq N < 2^n \rightarrow 1 + \max(2^{k-n} + 2\theta \, 2^{n+b-k-l}, 2^{k-n+1} + 2\theta \, 2^{n-1+b-k-l}) \not< \theta.$$

Remark: In both algorithms, these new conditions translate in terms of hardware into the use of slightly larger registers to store various intermediate variables.

**Claims**

1.  A method which uses an electronic processing facility executing a decrypting operation through a modular exponentiation modulo **M**, by digit-wise calculating modular and looped multiplications of two integer user quantities **X** and **Y** according to **X*Y** mod **M,** wherein **M** is a modulus integer, said method involving an iterative series of steps organized in a hierarchy of loops wherein each outer loop (60) requires execution of one or more inner loops (56), each step being associated with executing one or two first multiplications to produce a first result, and the hierarchy including a reduction of the size of the first result by one or more second multiplications to produce a second result, said method furthermore taking a modular reducing measure (64) for keeping a final result below a predetermined multiplicity of said modulus,
    said method being **characterized by** postponing all subtractions of the modulus pertaining to said reducing measure to a terminal phase of the modular exponentiation,
    by being conditional on selecting in Quisquater's reduction algorithm an enlarged digit length **p** = n - n' as being not less than **p ≥ b + 2,** whilst maintaining overall temporal performance of the method, and keeping intermediate results below a predetermined upper bound, wherein n' is the number of $\alpha$-ary digits in M,
    wherein Quisquater's reduction algorithm operates modulo an n-bit multiple **N** of **M** with the first **p** bits of N all taken equal to 1, and wherein **b** is the bit length of the digits used for calculation.

2.  A method which uses an electronic processing facility executing a decrypting operation through a modular exponentiation modulo **M,** by digit-wise calculating modular and looped multiplications of two integer user quantities **X** and **Y** according to **X*Y** mod **M,** wherein **M** is a modulus integer, said method involving an iterative series of steps organized in a hierarchy of loops wherein each outer loop (60) requires execution of one or more inner loops (56), each step being associated with executing one or two first multiplications to produce a first result, and the hierarchy including a reduction of the size of the first result by one or more second multiplications to produce a second result, said method furthermore taking a modular reducing measure for keeping a final result of such step below a predetermined multiplicity of said modulus,
    said method being **characterized by** selectively postponing the subtraction of the modulus pertaining to said reducing measure to a terminal phase of the modular exponentiation, by being conditional on selecting Barrett's preprocessing parameters k and l to obey

$$\{1 + \max ( \alpha^{k-n+1} + ( a + g) \, \alpha^{n-1+b-k-l}, \, \alpha^{k-n} + (a + g) \, \alpha^{n+b-k-l}) < \theta\},$$

to maintaining overall temporal performance of the method, and to keeping intermediate results below a predetermined upper bound,
and in executing the exponentiation through using Barrett's reduction algorithm modulo M itself, thereby having all intermediate results < θ **M,**
wherein

$\alpha$ digit base for the numbers p, q, M, N, etcetera
b number of digits per digit group
n number of $\alpha$ -ary digits in N
θ expansion factor; *all* intermediate results w satisfy $0 \leq w < \theta N$ wherein $0 \geq 1$,
a a predetermined integer with the property that a N is an upper bound for the first multiplicand u of the first and the second multiplications
g a predetermined integer with the property that g N is an upper bound for the intermediate results.

3. A device comprising an electronic processing facility arranged for executing the method as claimed in Claims 1 or 2.

4. A device as claimed in Claim 3, and having enhanced register width for therein storing intermediate results of the exponentiation.


**Patentansprüche**

1. Verfahren, das eine elektronische Verarbeitungsmöglichkeit benutzt, wobei ein Entschlüsselungsvorgang durch eine modulare Exponentiation Modulo M durchgeführt wird, und zwar durch eine zahlweise Berechnung modularer und geschleifter Multiplikationen zweier ganzzahliger Benutzerquantitäten X und Y entsprechend X*Y mod M, wobei M ein Modulinteger ist, wobei das Verfahren eine iterative Reihe von Schritten betrifft, organisiert in einer Hierarchie von Schleifen, wobei jede Außenschleife (60) eine Durchführung einer oder mehrerer innerer Schleifen (56) erfordert, wobei jeder Schritt mit der Durchführung von einer oder zwei ersten Multiplikationen assoziiert ist zum Erzeugen eines ersten Ergebnisses, und wobei die Hierarchie eine Reduktion der Größe des ersten Ergebnisses durch eine oder mehrere zweite Multiplikationen zum Erzeugen eines zweiten Ergebnisses umfasst,
wobei das genannte Verfahren eine modulare Reduziermaßnahme (64) trifft, damit ein Endergebnis unterhalb einer vorbestimmten Vielfachheit des genannten Moduls gehalten wird,
wobei das genannte Verfahren **gekennzeichnet ist**

- **durch** Verschiebung aller Subtraktionen des Moduls, die genannte Reduktionsmaßnahme betreffend zu einer Endphase der modularen Exponentiation,
- **durch** Bedingung bei der Selektion des Reduktionsalgorithmus von Quisquater, dass eine vergrößerte Zahllänge p = n - n' nicht kleiner ist als p ≥ b+2, während die gesamte temporale Leistung des Verfahrens beibehalten wird, und **dadurch**, dass Zwischenergebnisse unterhalb einer vorbestimmten oberen Grenze gehalten werden, wobei n' die Anzahl $\alpha$-adische Zahlen in M ist,

wobei der Reduktionsalgorithmus von Quisquater modulo ein n-Bit Vielfaches N von M bearbeitet, wobei die ersten p Bits von N alle als gleich 1 genommen werden, und wobei b die Bitlänge der zur Berechnung verwendeten Zahlen ist.

2. Verfahren, das eine elektronische Verarbeitungsmöglichkeit benutzt beim Durchführen eines Entschlüsselungsvorgangs durch eine modulare Exponentiation Modulo M, durch eine zahlweise Berechnung modularer und geschleifter Multiplikationen von zwei ganzzahligen Benutzerquantitäten X und Y entsprechend X*Y mod M, wobei M ein Modulinteger ist, wobei das genannte Verfahren eine iterative Reihe von Schritten betrifft, organisiert in einer Hierarchie von Schleifen, wobei jede Außenschleife (60) die Durchführung einer oder mehrerer Innenschleifen (56) erfordert, wobei jeder Schritt mit der Durchführung von einer oder von zwei ersten Multiplikationen assoziiert ist zum Erzeugen eines ersten Ergebnisses, und wobei die Hierarchie eine Reduktion der Größe des ersten Ergebnisses um eine oder mehrere zweite Multiplikationen zum Erzeugen eines zweiten Ergebnisses umfasst, wobei das genannte Verfahren weiterhin eine weitere modulare Reduktionsmaßnahme trifft um das Endergebnis eines derartigen Schrittes unterhalb einer vorbestimmten Vielfachheit des genannten Moduls zu halten,

wobei das genannte Verfahren **gekennzeichnet ist durch** selektives Verschieben der Subtraktion des Moduls, das zu der genannten Reduktionsmaßnahme gehört, zu einer Endphase der modularen Exponentiation, **durch** die Bendingung bei der Selektion der Vorverarbeitungsparameter von Barret k und l um Folgendes auszuführen

$$\{1 + \max(\alpha^{k-n+1} + (a + g)\,\alpha^{n-1+b-k-l},\; \alpha^{k-n} + (a+g)\,\alpha^{n+b-k-l}) < 0\}$$

zum Beibehalten der gesamten zeitlichen Leistung des Verfahrens, und um Zwischenergebnisse unterhalb einer vorbestimmten oberen Grenze zu halten,

und **durch** Durchführung der Exponentiation **durch** Verwendung des Reduktionsalgorithmus modulo M von Barret selber, wodurch alle Zwischenergebnisse < 0 M sind,

wobei -

α Zahlenbasis für die Zahlen p, q, M, N, usw.

b Anzahl Ziffern je Ziffergruppe

n Anzahl α-stufiger Zahlen in N

0 Expansionsfaktor, alle Zwischenergebnisse w entsprechen $0 \leq w < 0N$, wobei $0 \geq 1$ ist

a eine vorbestimmte ganze Zahl mit der Eigenschaft, dass eine N eine obere Grenze für den ersten Multiplikanden u der ersten und der zweiten Multiplikation ist

g eine vorbestimmte ganze Zahl mit der Eigenschaft, dass g N eine obere Grenze für die Zwischenergebnisse ist.

3.  Anordnung mit einer elektronischen Verarbeitungsmöglichkeit, vorgesehen zum Durchführen des Verfahrens nach Anspruch 1 oder 2.

4.  Anordnung nach Anspruch 3, mit einer verbesserten Registergröße um darin Zwischenergebnisse der Exponentiation zu speichern.

**Revendications**

1.  Procédé qui utilise un équipement de traitement électronique exécutant une opération de déchiffrement par une exponentiation modulaire modulo M, en calculant chiffre par chiffre des multiplications modulaires et en boucle de deux entiers **X** et **Y** de l'utilisateur selon **X*Y mod M,** où M est un entier module, ledit procédé impliquant une série itérative d'étapes organisées en hiérarchie de boucles dans lesquelles chaque boucle externe (60) exige l'exécution d'une ou plusieurs boucles internes (56), chaque étape étant associée avec l'exécution d'une ou deux premières multiplications pour produire un premier résultat, et la hiérarchie incluant une réduction de taille du premier résultat par une seconde multiplication ou plus pour produire un second résultat,

    ledit procédé prenant en outre une mesure de réduction modulaire (64) pour garder le résultat final sous une multiplicité prédéterminée dudit module,

    ledit procédé étant **caractérisé en** reportant à plus tard toutes les soustractions du module appartenant à ladite mesure de réduction à une phase terminale de l'exponentiation modulaire,

    en étant conditionnel en sélectionnant dans l'algorithme de réduction de Quisquater une longueur de chiffre agrandie **p** = n - n' n'étant pas plus petite que **p** ≥ **b** + **2**, tout en maintenant la performance globale du procédé, et gardant les résultats intermédiaires sous une limite supérieure prédéterminée, où **n'** est le nombre de chiffres α-aires dans **M**, dans lequel l'algorithme de réduction de Quisquater fonctionne modulo un multiple N à n bits de **M** avec les p premiers bits de **N** pris tous égaux à 1, et dans lequel **b** est la longueur en bit des chiffres utilisés pour le calcul.

2.  Procédé qui utilise un équipement de traitement électronique exécutant une opération de déchiffrement par exponentiation modulaire modulo **M**, en calculant chiffre par chiffre des multiplications modulaires et en boucle de deux entiers **X** et **Y** de l'utilisateur selon **X*Y mod M,** où **M** est un module entier, ledit procédé impliquant une série itérative d'étapes organisées en hiérarchie de boucles dans lesquelles chaque boucle externe (60) exige l'exécution d'une ou plusieurs boucles internes (56), chaque étape étant associée avec l'exécution d'une ou deux premières multiplications pour produire un premier résultat, et la hiérarchie incluant une réduction de taille du premier résultat par une seconde multiplication ou plus pour produire un second résultat,

ledit procédé prenant en outre une mesure de réduction modulaire pour garder le résultat final d'une telle étape sous une multiplicité prédéterminée dudit module,

ledit procédé étant **caractérisé en** reportant sélectivement à plus tard la soustraction du module appartenant à ladite mesure de réduction à une phase terminale de l'exponentiation modulaire en étant conditionnel en sélectionnant les paramètres de prétraitement de Barrett k et l pour obéir à

$$\{1 + \max(\alpha^{k-n+1} + (a + g)\, \alpha^{n-1+b-k-l}, \alpha^{k-n} + (a + g)\, \alpha^{n+b-k-l}) < \theta\},$$

pour maintenir la performance temporelle globale du procédé, et pour garder les résultats intermédiaires sous une borne supérieure prédéterminée,

et en exécutant l'exponentiation par l'utilisation de l'algorithme de réduction de Barrett modulo M lui-même, par ce moyen ayant tous les résultats intermédiaires $< \theta M$, où

$\alpha$ base de numération pour les nombres p, q, M, N, etc...

b nombre de chiffres par groupe de chiffres

n nombre de chiffres $\alpha$-aires dans N

$\theta$ facteur d'expansion, tous les résultats intermédiaires satisfont $0 \leq w < \theta N$ où $\theta \geq 1$,

a un entier prédéterminé avec la propriété que aN est une borne supérieure pour le premier multiplicande u de la première et seconde multiplications

g un entier prédéterminé avec la propriété que gN est une borne supérieure pour les résultats intermédiaires.

3. Dispositif comprenant un équipement de traitement électronique disposé pour exécuter le procédé selon les revendications 1 ou 2.

4. Dispositif selon la revendication 3, et ayant une largeur de registre étendue pour y mémoriser les résultats intermédiaires de l'exponentiation.

FIG. 1

FIG. 2